# EUROPEAN PATENT SPECIFICATION

(11) **EP 0 633 699 B1**
(45) Date of publication and mention of the grant of the patent: **20.01.1999**
(21) Application number: 94304734.0
(22) Date of filing: 28.06.1994
(51) Int. Cl.: H04N 7/24, H04N 7/50, H04N 5/926

(54) **Forced intra-frame coding method**
Intra-Bild-Zwangskodierungsverfahren
Méthode de codage intra-image forcé

(30) Priority: 30.06.1993 KR 9312087
(43) Date of publication of application: 11.01.1995
(73) Proprietor: SAMSUNG ELECTRONICS CO., LTD., Suwon-city, Kyungki-do 441-373 (KR)
(72) Inventor: Jeong, Jechang, Seocho-gu, Seoul (KR); Ahn, Wooyoun, Suwon-city, Kyungki-do (KR)
(74) Representative: Neill, Alastair William

(56) References cited:
- EP-A- 0 467 717
- EP-A- 0 547 460
- EP-A- 0 556 063
- EP-A- 0 558 259
- EP-A- 0 575 997
- EP-A- 0 579 450
- DE-A- 4 025 756
- US-A- 4 651 206
- US-A- 5 057 916

## Description

The present invention relates to a system for coding a digital video signal, and particularly although not exclusively, to a forced intra-frame coding method for coding to rapidly and precisely reproduce forced intra-frame coded video data.

Generally speaking, apparatus for digital processing of video and audio signals such as a high-definition television set, high-definition video cassette recorder, digital video cassette recorder, and digital camcorder, contain a system for coding, transmitting and storing the video and audio signals in digital data, and thereafter decoding and reproducing the coded data. For industrial use of such coding/decoding systems international standardization, is in progress so as to determine standard formats appropriate for individual application fields.

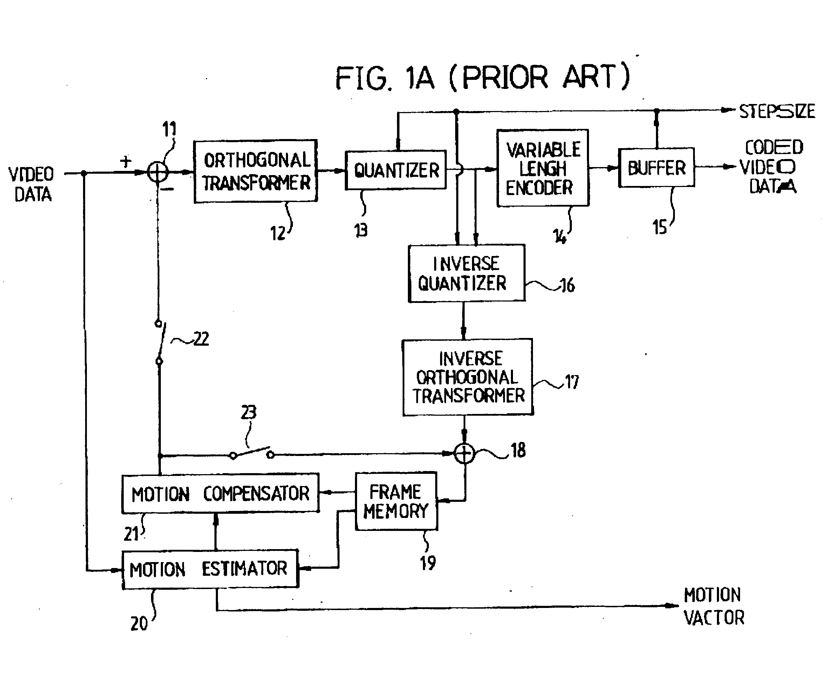

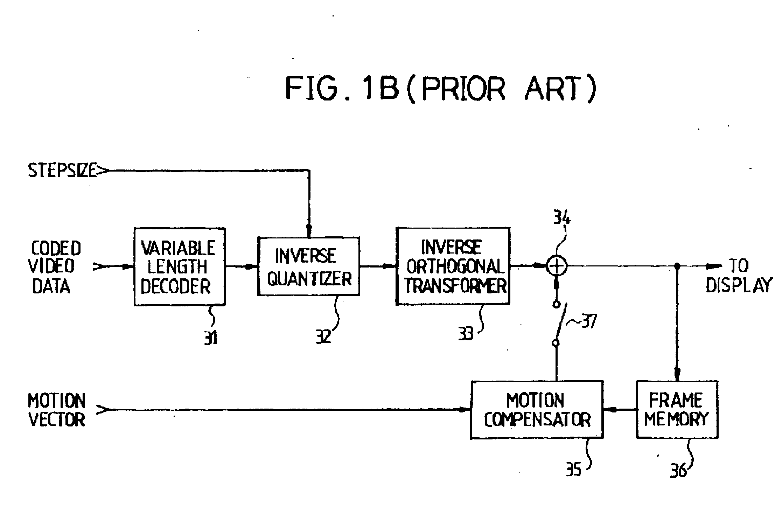

Referring to the accompanying drawings, Figures 1a and 1b are block diagrams of conventional coding and decoding systems;
Figures 2a and 2b are conceptional diagrams of the format of coded video data;
Figures 3a, 3b and 3c are conceptional diagrams to explain the conventional forced intra-frame coding;

Figure 1a is a block diagram of a general coding system, whose operation is well-known to ordinary skilled persons in the art. Intra-frame and inter-frame coding will be briefly discussed with reference to Figure 1a.

For intra-frame coding, switches 22 and 23 are both turned off so that a subtractor 11 sends externally input video data to an orthogonal transformer 12. The external video data is fed to a variable-length encoder 14 via the orthogonal transformer 12 and a quantizer 13. The video data is then transmitted by a buffer 15 to a receiver.

Thus, in the intra-frame coding the external video data, is input to the subtractor 11 and then pulse-code modulated, and transmitted by the buffer 15 to a receiver.

For inter-frame coding, switches 22 and 23 both are turned on so that subtractor 11 subtracts video data supplied from a motion compensator 21 from the externally input video data. As a result, a difference signal of the input video data and video data previous to the input video data by one frame is applied to orthogonal transformer 12. An adder 18 adds data applied via an inverse quantizer 16 and an inverse orthogonal transformer 17 to the output data of the motion compensator 21, and outputs the added result to a frame memory 19. In the inter-frame coding, the difference data obtained from subtractor 11 is coded, stored in the buffer 15, and then output to the receiver. Such a PCM or differential PCM technique is well-known in the art.

Figure 1b is a block diagram of a prior art general decoding system, which decodes to reproduce the video data coded by such a coding system as of Figure la. The general decoding system comprises a variable-length decoder 31, an inverse quantizer 32, an inverse orthogonal transformer 33, an adder 34, a motion compensator 35, and a frame memory 36 so as to decode the video data coded by the Figure 1 apparatus.

In the case of intra-frame coded data, the output data of inverse orthogonal transformer 33 passes through the adder 34 with a switch 37 being turned off.

In the case of inter-frame coded data, adder 34 adds the output data of the inverse orthogonal transformer 33 and data applied from motion compensator 25 via the turned-on switch 37. As the decoding system of Figure 1b is commonly used, its operation therefore will not be described in detail.

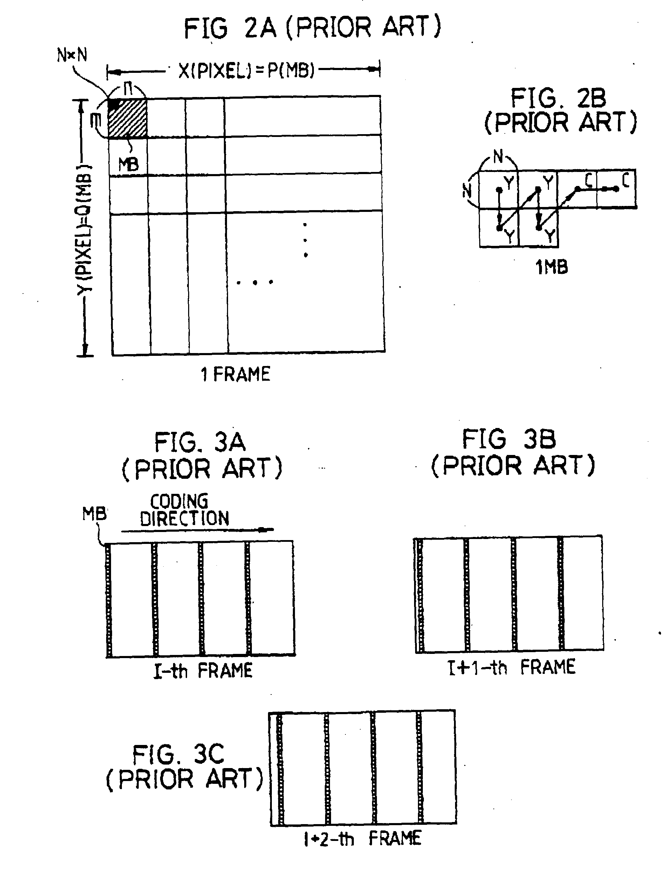

Figure 2a illustrates one prior art frame of video data coded by the apparatus of Figure la. As shown in Figure 2a, one frame is made up of X(column) x Y(row) pixels, and is divided into P(column) x Q(row) macro blocks (hereinafter referred to as MB) which are predetermined units for coding. The MB consists of m(row)-by-n(column) data blocks having N-by-N pixels. Each of the MBs has luminance data blocks Y and colour data blocks C. If one MB is made up of four luminance data blocks Y and two colour data blocks C, NxN pixel blocks of the MB are coded according to a prior art coding method in the order of the arrow shown in Figure. 2b.

In such a prior art coding system, when power is turned on, or a channel is changed, or an error is produced in the middle of coding, there is a problem that the original image cannot be restored in an inter-frame coding in which a frame is reconstructed by adding a decoded difference signal and a previous frame signal.

In order to enable the decoder to normally restore image, the coder performs intra-frame coding with respect to part of data of the overall frames. Units for the intra-frame coding are the macro blocks. MBs which are forcibly intra-frame coded by a predetermined period are called "forced intra MBs".

Figures 3a, 3b and 3c illustrate forcibly intra-frame coded frames of video data. Forcibly intra-frame coded MBs are represented by the hatched columns in Figures 3a, 3b and 3c. First in Figure 3a, the i-th frame of video data is coded sequentially from left to right. For coding of respective frames, macro blocks of the uppermost of one frame are coded from left to right. As shown in Figures 3a, 3b and 3c, the forced intra-frame coding is performed for every predetermined period of MB. The remaining macro blocks are inter-frame coded. When one row of coding is finished, a next row of coding is carried out in the same way. Likewise, respective macro blocks are coded.

When the i-th frame of coding is finished, forcibly intra-frame coded MB columns of i+1-th frame, the next frame, are shifted by one column to the right, as shown in Figure 3b. Likewise, when the i+1-th frame of coding is finished, the forcibly intra-frame coded MB columns of the i+2-th frame, the next frame, are shifted by one column, as shown in Figure 3c.

The data coded in the above-described way is restored by the apparatus of Figure 1b. The inter-frame coded macro blocks are restored on the basis of a normally renewed previous frame of video data. If the previous frame of video data is not in a state of renewal, the inter-frame coded macro blocks are not normally restored. Therefore, if there is a horizontal movement in the blocks, a time delay is required for normal restoration of the inter-frame coded macro blocks since the previous frame of video data is not normally renewed. That is, a time delay is required until the previous frame of video data for use in the restoration of the inter-frame coded macro blocks is completely renewed. Since there is more horizontal movement than vertical movement in most images, there is a problem that the time delay becomes more serious.

Further, if the coding direction is horizontal as in the conventional technique, the amount of forcibly intra-frame coded data increases so much as to severely vary the amount of coded information.

A prior art technique for enabling high-speed playback of encoded video information is disclosed in EP No. 0,536,630 A2 laid open on April 14, 1993 by Niimura. According to this disclosure, one refresh block is transmitted for each of horizontally disposed 11 super blocks in a data transmission sequence different from a sequence of reading pixels arranged in accordance with scanning lines. Then, in a high-speed playback mode, the refresh block data is serially written in a frame memory, and the data stored in the frame memory is read out in the transmission sequence of the pixels in accordance with the scanning lines.

US 4 651 206 discloses a method of preventing use of motion estimation circuitry when an intra-frame coding operation (refresh) is carried out.

US 5 057 916 discloses a method of refreshing a region at a time of a video image to prevent data in an unrefreshed region corrupting an already refreshed region.

The present invention proposes a new method for facilitating the playback of coded information at a high speed.

It is an object of specific methods of the present invention to provide a forced intra-frame coding method for rapidly and precisely restoring video data.

Specific methods according to the invention may achieve the object, by improving a method of performing the forced intra-frame coding in a video data coding system.

According to one aspect of the present invention, there is provided a forced intra-frame coding method characterised by comprising the steps of:
coding a video frame by : (a) receiving blocks of the video frame in a vertical direction of said video frame from top to bottom thereof; and (b) selectively intra coding or inter coding vertically said received blocks to thereby reduce the amount of information and forcibly intra-frame coding a number of vertically spaced apart horizontal block lines in said frame; and
subsequently coding a next video frame by repeating said steps (a) and (b) for said next frame but shifting the location of said forcibly intra-frame coded block lines vertically by at least one block.

Preferably, when one macro block line forming said video frame is completely input, said reception step (a) begins receiving a macro block line located to the right of said completely input macro block line.

Preferably, said coding step (b) performs coding so that said forcibly intra-frame coded block lines are plural for every frame.

Preferably, in said subsequent coding step of said next video frame, said forcibly intra-frame coded block lines are shifted downward by one block line for every frame.

Preferably, said forcibly intra-frame coded block lines are made up of a plurality of macro blocks forming one line of a video frame.

Preferably, in said subsequent coding step of said next video frame, successive said intra frame coded block lines are set to have a predetermined vertical interval therebetween.

The method of the invention is preferably applied in a method of selectively intra/inter-frame coding video data divided into predetermined size of blocks.

Furthermore, as the encoding direction of the blocks is set to be vertical so that the amount of data for respective macro blocks stays uniform and the transmission buffer is easily controlled.

The intra frame coded macro block lines may be set to have a predetermined vertical interval, so as to restore the original image relatively rapidly.

The invention includes a forced intra-frame coding method in which video data is coded in the vertical direction of a frame and the coding is performed for forcibly intra-frame coded macro block (MB) lines set to have a predetermined vertical interval. Whenever the coding for respective frames is finished, the macro block lines are shifted downward by one macro block so that the original image is restored relatively rapidly. Furthermore, the coding direction of macro blocks is set to be vertical so that the amount of data for respective macro blocks stays uniform and the transmission buffer of a coder is easily controlled.

For a better understanding of the invention, and to show how embodiments of the same may be carried into effect, reference will now be made, by way of example, to the accompanying diagrammatic drawings, in which:

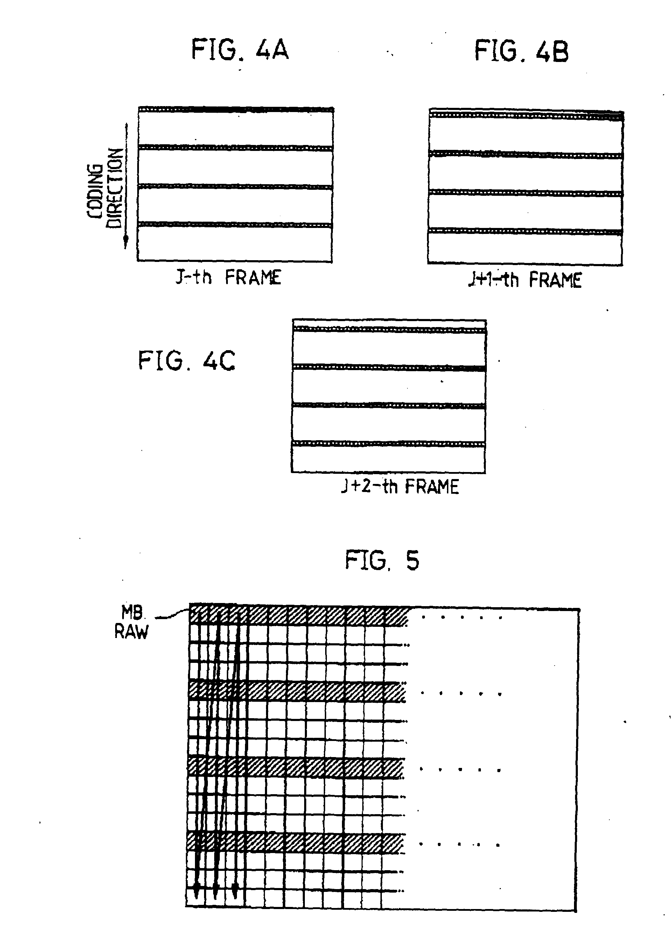

Figures 4a, 4b and 4c are conceptional diagrams to explain the forced intra-frame coding of the present invention; and
Figure 5 illustrates a coding sequence of video frames.

Hereinafter, a preferred method of the present invention will be described with reference to the attached drawings.

Figures 4a, 4b and 4c illustrate frames coded according to the forced intra-frame coding of the preferred method. Referring to Figure 4a, first, in the j-th frame the forcibly intra-frame coded MB lines are set to be horizontal and have a predetermined interval vertically. Video data is coded in the vertical direction of the frames, say, from the top to the bottom thereof, as shown in Figure 5. If the j-th frame of coding is finished in this way, the forcibly intra-frame coded MB lines of a next frame, the j+1-th frame, are shifted downward by one line, as shown in Figure 4b. Likewise, if the j+1-th frame of coding is finished, the forcibly intra-frame coded MB lines of the next frame, the j+2-th frame, are shifted downward by one line, as shown in Figure 4c.

Figure 5 is an enlarged diagram of the forcibly intra-frame coded j-th frame of Figure 4a. The coding direction of this method is that when the coding related to one column of macro block lines are finished, then the coding related to the macro block lines to the right of the above coded macro block lines are performed. The coding is carried out from the topmost macro block to the bottommost macro block. Since the encoding direction is vertical, in the case of the forced intra-frame encoding of Figures 4a, 4b and 4c, the amount of coded information lessens. In other words, since the amount of data for respective encoded macro blocks stays roughly uniform, the coding facilitates the control of the buffer 15 shown in Figure 1.

In order to realise the features of the present method with an apparatus, it is required to change the input sequence of video data input to the apparatus to an input sequence according to the present method.

Whereas, the conventional coding system horizontally reads out the macro blocks of a video frame, an apparatus for implementing the present method vertically reads out the macro blocks of the video frame, as shown in Figure 5.

Video data can be coded and decoded by employing the present method in the apparatuses of Figures 1a and 1b with adapted to use the present method by suitable modifications to that apparatus, which can be carried out by the ordinary skilled persons in the art.

As described above, in the present forced intra-frame coding method, the forcibly intra-frame coded macro block lines are set to have a predetermined vertical interval so as to restore the original image relatively rapidly, as compared with the conventional method in which the macro block lines are formed vertically.

Furthermore, the encoding direction of the macro blocks is set to be vertical so that the amount of data for respective macro blocks stays uniform and the transmission buffer is easily controlled.

## Claims

1. A method of coding video data divided into predetermined size video data blocks, the method characterised by comprising the steps of:
coding a video frame by : (a) receiving blocks of the video frame in a vertical direction of said video frame from top to bottom thereof; and (b) selectively intra-frame coding or inter-frame coding vertically said received blocks to thereby reduce the amount of information and forcibly intra-frame coding a number of vertically spaced apart horizontal block lines in said frame; and
subsequently coding a next video frame by repeating said steps (a) and (b) for said next frame but shifting the location of said forcibly intra-frame coded block lines vertically by at least one block.

2. A method as claimed in claim 1, wherein, when one macro block column forming said video frame is completely input, said reception step (a) begins receiving a macro block column located to the right of said completely input macro block column.

3. A method as claimed in claim 1 or 2, wherein said coding step (b) performs coding so that said forcibly intra-frame coded block lines are plural for every frame.

4. A method as claimed in any one of claims 1 to 3, wherein in said subsequent coding step of said next video frame, said forcibly intra-frame coded block lines are shifted downward by one block line for every frame.

5. A method as claimed in any one of claim 1 to 4, wherein said forcibly intra-frame coded block lines are made up of a plurality of macro blocks forming one line of a video frame.

6. A method as claimed in any one of claims 1 to 5, in which in said subsequent coding step of said next video frame, successive said intra frame coded block lines are set to have a predetermined vertical interval therebetween.

7. A method of selectively intra/inter-frame coding video data divided into a predetermined size of blocks comprising a forced intra-frame coding method according to any one of claims 1 to 6.

## Patentansprüche

1. Verfahren zum Codieren von Videodaten, welche in Videodatenblöcke vorgegebener Größe unterteilt sind, wobei das Verfahren dadurch gekennzeichnet ist, daß es die folgenden Schritte umfaßt:
das Codieren eines Videobildes durch: (a) das Empfangen von Blöcken des Videobildes in vertikaler Richtung des Videobildes von oben nach unten und (b) das wahlweise vertikale Intra-Bild-Codieren oder Inter-Bild-Codieren der empfangenen Blöcke, um dadurch die Informationsmenge zu reduzieren und eine Anzahl von vertikal beabstandeten horizontalen Blöcken in dem Bild zwangsweise einer Intra-Bild-Codierung zu unterziehen, und
das anschließende Codieren des nächsten Videobildes durch Wiederholung der Schritte (a) und (b) für das nächste Bild, wobei jedoch der Ort der zwangsweise Intra-Bild-codierten Blocklinien vertikal um mindestens einen Block verschoben wird.

2. Verfahren gemäß Anspruch 1, wobei nach der vollständigen Eingabe einer Makroblockspalte, welche das Videobild darstellt, der Empfangsschritt (a) mit dem Empfang der Makroblockspalte beginnt, die sich rechts von der vollständig eingegebenen Makroblockspalte befindet.

3. Verfahren gemäß Anspruch 1 oder 2, wobei der Codierschritt (b) derart erfolgt, daß für jedes Bild mehrere zwangsweise Intra-Bild-codierte Blocklinien vorhanden sind.

4. Verfahren nach einem der Ansprüche 1 bis 3, wobei im nachfolgenden Codierschritt des nächsten Videobildes die zwangsweise Intra-Bild-codierten Blocklinien pro Bild um eine Blocklinie nach unten verschoben werden.

5. Verfahren nach einem der Ansprüche 1 bis 4, wobei die Intra-Bild-codierten Blocklinien aus einer Vielzahl von Makroblöcken bestehen, die eine Linie eines Videobildes darstellen.

6. Verfahren nach einem der Ansprüche 1 bis 5, wobei im anschließenden Codierschritt des nächsten Videobildes die aufeinanderfolgenden Intra-Bild-codierten Blocklinien so eingestellt sind, daß zwischen ihnen ein vorgegebener vertikaler Abstand vorhanden ist.

7. Verfahren zum selektiven Intra/Inter-Bild-Codieren von Videodaten, die in Blöcke mit vorgegebener Größe untergliedert sind, welches ein Verfahren zur Intra-Bild-Zwangscodierung gemäß einem der Ansprüche 1 bis 6 umfaßt.

## Revendications

1. Procédé de codage de données vidéo divisées en blocs de données vidéo de taille prédéterminée, caractérisé par les étapes de:
codage d'une trame vidéo par: (a) réception de blocs de la trame vidéo dans la direction verticale de ladite trame vidéo, du haut en bas de celle-ci ; et (b) codage vertical desdits blocs reçus, sélectivement intra-trame ou inter-trames, pour réduire ainsi la quantité d'informations et codage intra-trame forcé d'un nombre de lignes de blocs horizontales et verticalement espacées l'une de l'autre dans ladite trame; et le; et à
codage subséquent d'une trame vidéo suivante par répétition desdites étapes (a) et (b) pour ladite trame suivante, mais en décalant verticalement d'au moins un bloc la position desdites lignes de blocs à codage intra-trame forcé.

2. Procédé selon la revendication 1, dans lequel, quand une colonne de macro blocs formant ladite trame vidéo a été entièrement reçue, ladite étape de réception (a) commence par la réception d'une colonne de macro blocs située à droite de ladite colonne de macro blocs entièrement reçue.

3. Procédé selon la revendication 1 ou 2, dans lequel ladite étape de codage (b) réalise un codage tel que lesdites lignes de blocs à codage intra-trame forcé sont multiples dans chaque trame.

4. Procédé selon l'une quelconque des revendications 1 à 3, dans lequel, dans ladite étape subséquente de codage de ladite trame vidéo suivante, lesdites lignes de blocs à codage intra-trame forcé sont décalées d'une ligne de blocs vers le bas, à chaque trame.

5. Procédé selon l'une quelconque des revendications 1 à 4, dans lequel lesdites lignes de blocs à codage intra-trame forcé sont constituées d'une pluralité de macro blocs formant une ligne d'une trame vidéo.

6. Procédé selon l'une quelconque des revendications 1 à 5, dans lequel, dans ladite étape subséquente de codage de ladite trame vidéo suivante, un intervalle vertical prédéterminé sépare lesdites lignes successives de blocs à codage intra-trame.

7. Procédé de codage sélectivement intra/inter-trames de données vidéo divisées en blocs de taille prédéterminée, comprenant un procédé de codage intra-trame forcé selon l'une quelconque des revendications 1 à 6.
